# EUROPÄISCHE PATENTSCHRIFT

(11) **EP 0 403 899 B1**
(45) Veröffentlichungstag und Bekanntmachung des Hinweises auf die Patenterteilung: **20.10.1993**
(21) Anmeldenummer: 90110931.4
(22) Anmeldetag: 09.06.1990
(51) Int. Cl.: A01D 89/00, A01F 29/06

(54) **Feldhäcksler**
Forage harvester
Ramasseuse-hacheuse

(30) Priorität: 19.06.1989 DE 3919889
(43) Veröffentlichungstag der Anmeldung: 27.12.1990
(73) Patentinhaber: CLAAS SAULGAU GMBH, D-88340 Saulgau (DE)
(72) Erfinder: Spofforth, Brian, Suffolk IP 286 QZ (GB)

(56) Entgegenhaltungen:
- DE-A- 2 926 817
- PROSPEKT "Vielseitigkeit und Schlagkraft sichern den Erfolg" September 1988 Harsewinkel CLAAS VERTRIEBSGMBH

## Beschreibung

Die Erfindung bezieht sich auf einen Feldhäcksler nach dem Oberbegriff des Anspruches 1.

Das hier vorgesehene Reversiergetriebe dient dazu, daß bei gegebener oder bevorstehender Verstopfung der Einzugsorgane diese in ihrer Drehrichtung umgekehrt werden können, wodurch das bereits eingezogene Erntegut wieder nach vorne ausgestoßen wird. Damit das ausgestoßene Erntegut auf den Erdboden fallen kann, muß der vor und/oder über der Aufsammeltrommel befindliche Niederhalter manuell bei stillstehendem Feldhäcksler oder, wie in dem Prospekt "Vielseitigkeit und Schlagkraft sichern den Erfolg" der Claas Vertriebsgesellschaft mbH (Druckvermerk 9/88) auf Seite 4 links unten dargestellt, durch Hilfskraft aus dem Wirkbereich der Aufsammeltrommel gebracht werden.

Ein Nachteil dieser Anordnung besteht darin, daß der Fahrer gelegentlich den Schalter für das Reversiergetriebe betätigt, aber den Schalter für die Niederhaltersteuerung nicht oder zu spät betätigt. Ein weiterer Mangel kann darin liegen, daß der Durchgang zwischen der Aufsammeltrommel und dem nächstliegenden Bauteil des ausgehobenen Niederhalters zu gering ist, um das ausgestoßene Erntegut ungestört auf den Erdboden fallen zu lassen.

Beide Nachteile können durch eine Ausgestaltung nach der Erfindung vermieden werden. Danach sollen die Hilfskraftgeber für das Reversiergetriebe und für die Niederhaltersteuerung über einen gemeinsamen Schalter betätigt werden. Das kann bei hydraulischer Betätigung dadurch bewirkt werden, daß beide Steuerzylinder eine gemeinsame Druckleitung haben. Es ist auch möglich, den Steuerzylinder am Reversiergetriebe mit Niederdruck und den Steuerzylinder für die Niederhaltersteuerung mit Hochdruck zu versorgen, wobei beide Druckleitungen durch ein gemeinsames oder zwei miteinander gekoppelte Steuerventile angesteuert werden.

Nach einem weiteren Merkmal der Erfindung soll der Niederhalter, der z. B. aus einem Stabrechen oder einer oder mehreren Trommeln bestehen kann, zur Vergrößerung des Freiraumes für das ausgestossene Erntegut nach vorne verschoben und /oder in seinem in Fahrtrichtung hinten liegenden Bereich nach oben verschwenkt werden.

Weitere Ausführungsformen der Erfindung ergeben sich aus den übrigen Unteransprüchen.

Die Erfindung wird anhand von zwei Abbildungen beispielsweise erläutert.
- Fig. 1: zeigt einen Feldhäcksler mit den erfindungswichtigen Baugruppen schematisch von der Seite
- Fig. 2: zeigt den vorderen Teil eines Feldhäckslers in einer anderen Ausführung von der Seite.

Im Gehäuse (1) eines Feldhäckslers sind Einzugswalzen (2, 3) gelagert. Vor den Einzugswalzen (2, 3) befindet sich eine Einzugsschnecke (4). Vor und unter der Einzugsschnecke (4) ist eine Aufsammeltrommel (5) mit umlaufenden Federzinken (6) angeordnet. Die Einzugswalzen (2, 3) und die Einzugsschnecke (4) werden bei der Arbeit in Richtung der Pfeile (A) angetrieben. Die Drehrichtung kann mittels eines Reversiergetriebes (7) umgekehrt werden. Zu dessen Schaltung greift an einem Schalthebel (8) die Kolbenstange eines hydraulischen Druckzylinders (9) an. Die Rückführung des Schalthebels (8) geschieht durch eine Zugfeder (10).

Vor und über der Aufsammeltrommel (5) ist ein als Stabrechen ausgebildeter Niederhalter (11) um eine Achse (12) drehbar gelagert. In der Arbeitsstellung befindet sich der Niederhalter (11) in der ausgezogen gezeichneten etwa horizontalen Lage. Mit der Achse (12) fest verbunden ist ein Hebel (13), der mit einem Druckzylinder (14) in Wirkverbindung steht. Eine Zugfeder (15) bewirkt die Rückführung des Hebels (13) in die Arbeitsstellung.

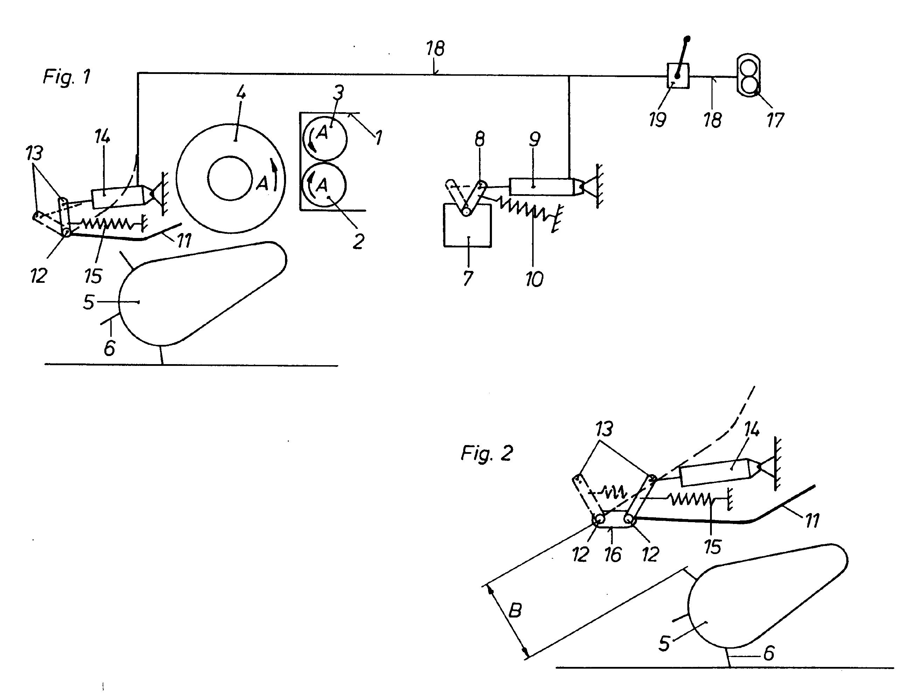

Während die Achse (12) des Niederhalters (11) in Figur 1 fest gelagert ist und sich deshalb von der ausgezogenen in die gestrichelte Lage verschwenken kann, ist die Achse (12) nach Figur 2 in einer Schlitzführung (16) gelagert. Wenn die Kolbenstange des Druckzylinders (14) nach Figur 2 ausgefahren wird, verschiebt sich die Achse (12) nach vorn und gleichzeitig wird der Niederhalter (11) von der ausgezogenen Lage in die gestrichelte Lage sowohl verschoben, als auch verschwenkt. Dadurch entsteht ein größerer Durchlaß (B) zwischen der Achse (12) und den Federzinken (6) der Aufsammeltrommel (5).

Von einer hydraulischen Pumpe (17) führt eine Druckleitung (18) über ein Steuerventil (19) sowohl zu dem Druckzylinder (9), als auch zu dem Druckzylinder (14). Damit können die Schaltung des Reversiergetriebes (7) und die Niederhaltersteuerung gemeinsam und gleichzeitig angesteuert werden.

## Patentansprüche

1. Feldhäcksler mit einem durch Hilfskraft gesteuerten Reversiergetriebe (7) für die Einzugsorgane (2, 3, 4) und einer Aufsammeltrommel (5) mit einem vor und/oder über dieser angeordneten Niederhalter (11) für das Erntegut, der mit Hilfskraft aus dem Wirkbereich der Aufsammeltrommel (5) entfernt werden kann, dadurch gekennzeichnet, daß die Bewegung des Niederhalters (11) selbstätig durch Schaltung des Reversiergetriebes (7) für die Einzugsorgane (2, 3, 4) durchführbar ist, wozu die beiden Hilfskraftgeber (9, 14) für das Reversiergetriebe (7) und für die Steuerung des Niederhalters (11) an einem gemeinsamen Schalter (19) angeschlossen und durch eine Handhabung gemeinsam betätigbar sind.

2. Feldhäcksler nach Anspruch 1, dadurch gekennzeichnet, daß der Schalter durch ein hydraulisches Steuerventil (19) dargestellt wird, das eine gemeinsame Druckleitung (18) für einen Steuerzylinder (9) am Reversiergetriebe (7) und einen Steuerzylinder (14) für den Niederhalter (11) mit Drucköl versorgt.

3. Feldhäcksler nach Anspruch 1, dadurch gekennzeichnet, daß der Schalter durch ein hydraulisches Steuerventil dargestellt wird, das zwei Druckleitungen mit gleichem oder ungleichem Druck für einen Steuerzylinder (9) am Reversiergetriebe (7) und einen Steuerzylinder (14) für den Niederhalter (11) mit Drucköl versorgt.

4. Feldhäcksler nach Anspruch 1, dadurch gekennzeichnet, daß der Schalter einen elektrischen Stellmotor für das Reversiergetriebe (7) und einen elektrischen Stellmotor für den Niederhalter (11) betätigt.

5. Feldhäcksler nach Anspruch 1, dadurch gekennzeichnet, daß der Schalter elektro/hydraulisch wirkt und einen elektrischen Stellmotor und einen hydraulischen Steuerzylinder betätigt.

6. Feldhäcksler nach einem der Ansprüche 1 - 5, dadurch gekennzeichnet, daß der Niederhalter (11) nach vorn verschoben und/oder in seinem in Fahrtrichtung hinten liegenden Bereich nach oben verschwenkt werden kann.

## Claims

1. A forage harvester comprising a reversing transmission (7) for the draw-in members (2, 3, 4), which is controlled by auxiliary force, and a pick-up drum (5) with a hold-down member (11) for the crop material, which hold-down member is arranged in front of and/or above the pick-up drum and can be removed from the operative region of the pick-up drum (5) by auxiliary force, characterised in that the movement of the hold-down member (11) can be effected automatically by switching of the reversing transmission (7) for the draw-in members (2, 3, 4), for which purpose the two auxiliary force producers (9, 14) for the reversing transmission (7) and for control of the hold-down member (11) are connected to a common switching means (19) and are jointly actuable by one manipulation.

2. A forage harvester according to claim 1 characterised in that the switching means is represented by a hydraulic control valve (19) which supplies pressure oil to a cannon pressure line (18) for a control cylinder (9) on the reversing transmission (7) and a control cylinder (14) for the hold-down member (11).

3. A forage harvester according to claim 1 characterised in that the switching means is represented by a hydraulic control valve which supplies pressure oil to two pressure lines at the same or different pressures for a control cylinder (9) on the reversing transmission (7) and a control cylinder (14) for the hold-down member (11).

4. A forage harvester according to claim 1 characterised in that the switching means actuates an electric control motor for the reversing transmission (7) and an electric control motor for the hold-down member (11).

5. A forage harvester according to claim 1 characterised in that the switching means acts electro/hydraulically and actuates an electric control motor and a hydraulic control cylinder.

6. A forage harvester according to one of claims 1 to 5 characterised in that the hold-down member (11) can be displaced forwardly and/or can be pivoted upwardly in its region which is at the rear in the direction of travel.

## Revendications

1. Ramasseuse-hacheuse comprenant un mécanisme inverseur (7) commandé par une force auxiliaire et destiné aux organes d'alimentation (2, 3, 4), et un tambour ramasseur (5) comportant un dispositif presseur (11) pour le produit récolté disposé à l'avant et/ou au-dessus de ce tambour et qui peut être éloigné par une force auxiliaire hors de la zone d'action du tambour ramasseur (5), caractérisée en ce que le mouvement du dispositif presseur (11) peut être obtenu automatiquement par commutation du mécanisme inverseur (7) destiné aux organes d'alimentation (2, 3, 4), les deux générateurs de force auxiliaire (9, 14) destinés au mécanisme inverseur (7) et à la commande du dispositif presseur (11) étant raccordés à un actionneur commun (19) et pouvant être actionnés en commun par une seule manoeuvre.

2. Ramasseuse-hacheuse selon la revendication 1, caractérisée en ce que l'actionneur est constitué par une soupape de commande hydraulique (19) qui alimente en huile sous pression une conduite de pression commune (18) destinée à un vérin de commande (9) du mécanisme inverseur (7) et à un vérin de commande (14) destiné au dispositif presseur (11).

3. Ramasseuse-hacheuse selon la revendication 1, caractérisée en ce que l'actionneur est constitué par une soupape de commande hydraulique alimentant en huile sous pression deux conduites de pression avec la même pression ou des pressions différentes, destinées à un vérin de commande (9) du mécanisme inverseur (7) et à un vérin de commande (14) du dispositif presseur (11).

4. Ramasseuse-hacheuse selon la revendication 1, caractérisée en ce que l'actionneur actionne un servomoteur électrique destiné au mécanisme inverseur (7) et un servomoteur électrique destiné au dispositif presseur (11).

5. Ramasseuse-hacheuse selon la revendication 1, caractérisée en ce que l'actionneur fonctionne de façon électrique/hydraulique et actionne un servomoteur électrique et un vérin de commande hydraulique.

6. Ramasseuse-hacheuse selon l'une des revendications 1 à 5, caractérisée en ce que le dispositif presseur (11) peut être déplacé vers l'avant et/ou pivoté vers le haut par sa partie qui est située à l'arrière par rapport à la direction de la marche.
